(19) Europäisches Patentamt / European Patent Office / Office européen des brevets

(11) **EP 4 293 945 A1**

(12) # EUROPEAN PATENT APPLICATION
published in accordance with Art. 153(4) EPC

(43) Date of publication:
**20.12.2023 Bulletin 2023/51**

(21) Application number: **22752237.2**

(22) Date of filing: **08.02.2022**

(51) International Patent Classification (IPC):
**H04L 5/00** (2006.01)    **H04L 27/26** (2006.01)

(52) Cooperative Patent Classification (CPC):
**H04L 5/00; H04L 27/26**

(86) International application number:
**PCT/CN2022/075498**

(87) International publication number:
**WO 2022/171076 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.02.2021 CN 202110180929**

(71) Applicant: **Vivo Mobile Communication Co., Ltd.
Dongguan, Guangdong 523863 (CN)**

(72) Inventors:
• **SUN, Bule
Dongguan, Guangdong 523863 (CN)**
• **JIANG, Dajie
Dongguan, Guangdong 523863 (CN)**

(74) Representative: **Winter, Brandl - Partnerschaft
mbB
Alois-Steinecker-Straße 22
85354 Freising (DE)**

(54) **RESOURCE DETERMINATION METHOD, RESOURCE CONFIGURATION METHOD, AND COMMUNICATION DEVICE**

(57) This application discloses a resource determining method, a resource configuration method, and a communication device, and pertains to the field of communication technologies. The resource determining method includes: determining, by a receive end device, a first resource grid, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid.

```
                          Start

A receive end device determines a first resource grid, where the first
resource grid is a delay-Doppler domain resource grid related to a direct current
subcarrier; and the first resource grid includes a direct current dedicated null       201
grid, or the first resource grid includes a zero-Doppler null grid and a guard
interval of the zero-Doppler null grid

                          End
```

FIG. 2

## Description

## CROSS-REFERENCE TO RELATED APPLICATIONS

This application claims priority to Chinese Patent Application No. 202110180929.7, filed on February 09, 2021 in China, which is incorporated herein by reference in its entirety.

## TECHNICAL FIELD

The present invention relates to the field of communications technologies, and in particular, to a resource determining method, a resource configuration method, and a communication device.

## BACKGROUND

In a complex electromagnetic wave transmission environment, because a large amount of scattering, reflection, and refraction planes exist, radio signals arrive at a receive antenna at different moments on different paths, that is, a multipath effect of transmission. When two adjacent symbols of a transmit signal arrive simultaneously on different paths, or, in other words, when a next symbol arrives within delay extension of a previous symbol, inter symbol interference (inter symbol interference, ISI) is generated. Similarly, in frequency domain, because of a Doppler effect caused by a relative speed between a transmit end and a receive end, subcarriers on which signals are located produce varying degrees of frequency offset, which causes overlapping of possibly orthogonal subcarriers, that is, inter-carrier interference (inter carrier interference, ICI) is produced. In a multi-carrier system using an orthogonal frequency division multiplexing (Orthogonal Frequency Division Multiplexing, OFDM) technology in an existing protocol, anti-ISI performance is better by adding a cyclic prefix (cyclic prefix, CP). However, a weakness of OFDM is that a size of a subcarrier spacing is limited. Therefore, in a high-speed moving scene (for example, a high-speed railway), a relatively large Doppler frequency shift caused by a relatively large relative speed between the receive end and the transmit end destroys orthogonality between OFDM subcarriers, and consequently serious ICI is produced between subcarriers. An orthogonal time frequency space (Orthogonal Time Frequency Space, OTFS) technology is proposed to resolve the foregoing problem in the OFDM system. The OTFS technology defines a transformation between a delay-Doppler domain and a time-frequency domain. Meanwhile, service data and a pilot are mapped to the delay-Doppler domain at the receive and the transmit end, to avoid ICI and ISI in the high-speed scene.

In addition, direct current carrier noise is also an important problem in the OFDM system. A signal transmitter and a signal receiver in LTE and NR communication systems generally use a zero intermediate frequency scheme or a one-time frequency conversion scheme to implement conversion between a baseband and a radio frequency. A local oscillator leakage problem exists in the zero intermediate frequency scheme and the one-time frequency conversion scheme, and relatively large direct current subcarrier noise is generated at a signal carrier frequency during transmission and receiving, which causes a very poor signal-to-noise ratio of the frequency. The subcarrier is referred to as a direct current (direct current, DC) subcarri er.

In Long Term Evolution (Long Term Evolution, LTE), a DC subcarrier is null in downlink OFDM, and a frequency offset 7.5 KHz scheme is used in uplink SC-FDMA. Currently, in 5G new radio (New Radio, NR), a bandwidth and a frequency domain location are not fixed (mainly because bandwidth part (Bandwidth Part, BWP) and carrier aggregation (Carrier Aggregation, CA) are used), a location of a direct current subcarrier in a frequency band is not fixed. Therefore, when a DC subcarrier is null, a method used is relatively complex and signaling overheads are relatively large.

## SUMMARY

Embodiments of this application provide a resource determining method, a resource configuration method, and a communication device, to resolve a problem in the related art that when a DC subcarrier is null, a method used is relatively complex and signaling overheads are relatively large.

According to a first aspect, a resource determining method is provided, including:

determining, by a receive end device, a first resource grid, where the first resource grid is a delay-Doppler domain resource grid related to a direct current subcarrier; and
the first resource grid includes a direct current dedicated null grid, or the first resource grid includes a zero-Doppler null grid and a guard interval of the zero-Doppler null grid.

According to a second aspect, a resource configuration method is provided, including:

determining, by a transmit end device, a first resource grid, where the first resource grid is a delay-Doppler domain resource grid related to a direct current subcarrier; and
the first resource grid includes a direct current dedicated null grid, or the first resource grid includes a zero-Doppler null grid and a guard interval of the zero-Doppler null grid.

According to a third aspect, a resource determining apparatus is provided, including:

a first determining module, configured to determine a first resource grid, where the first resource grid is a delay-Doppler domain resource grid related to a direct current subcarrier; and

the first resource grid includes a direct current dedicated null grid, or the first resource grid includes a zero-Doppler null grid and a guard interval of the zero-Doppler null grid.

According to a fourth aspect, a resource configuration apparatus is provided, including:

a second determining module, configured to determine a first resource grid, where the first resource grid is a delay-Doppler domain resource grid related to a direct current subcarrier; and

the first resource grid includes a direct current dedicated null grid, or the first resource grid includes a zero-Doppler null grid and a guard interval of the zero-Doppler null grid.

According to a fifth aspect, a communication device is provided, including a processor, a memory, and a program or an instruction that is stored in the memory and that can be run on the processor, where the program or the instruction is executed by the processor to implement the steps of the resource determining method in the first aspect or the steps of the resource configuration method in the second aspect.

According to a sixth aspect, a readable storage medium is provided. The readable storage medium stores a program or an instruction, and when the program or the instruction is executed by a processor, the steps of the method in the first aspect or the steps of the method in the second aspect are implemented.

According to a seventh aspect, a chip is provided. The chip includes a processor and a communications interface, the communications interface is coupled to the processor, and the processor is configured to run a program or an instruction to implement the method in the first aspect or the method in the second aspect.

According to an eighth aspect, a computer program product is provided. The computer program product is stored in a non-transitory storage medium, and the computer program product is executed by at least one processor to implement the method in the first aspect or the method in the second aspect.

In the embodiments of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

**BRIEF DESCRIPTION OF DRAWINGS**

FIG. 1 is a structural diagram of a communication system to which embodiments of this application can be applied;

FIG. 2 is a schematic flowchart of a resource determining method according to an embodiment of this application;

FIG. 3 is a first schematic diagram of a resource grid according to an embodiment of this application;

FIG. 4 is a second schematic diagram of a resource grid according to an embodiment of this application;

FIG. 5 is a third schematic diagram of a resource grid according to an embodiment of this application;

FIG. 6 is a fourth schematic diagram of a resource grid according to an embodiment of this application;

FIG. 7 is a fifth schematic diagram of a resource grid according to an embodiment of this application;

FIG. 8 is a schematic flowchart of a resource configuration method according to an embodiment of this application;

FIG. 9 is a schematic module diagram of a resource determining apparatus according to an embodiment of this application;

FIG. 10 is a schematic module diagram of a resource configuration apparatus according to an embodiment of this application;

FIG. 11 is a structural block diagram of a communication device according to an embodiment of this application;

FIG. 12 is a structural block diagram of a terminal according to an embodiment of this application; and

FIG. 13 is a structural block diagram of a network side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6th generation (6th Generation, 6G) communications system.

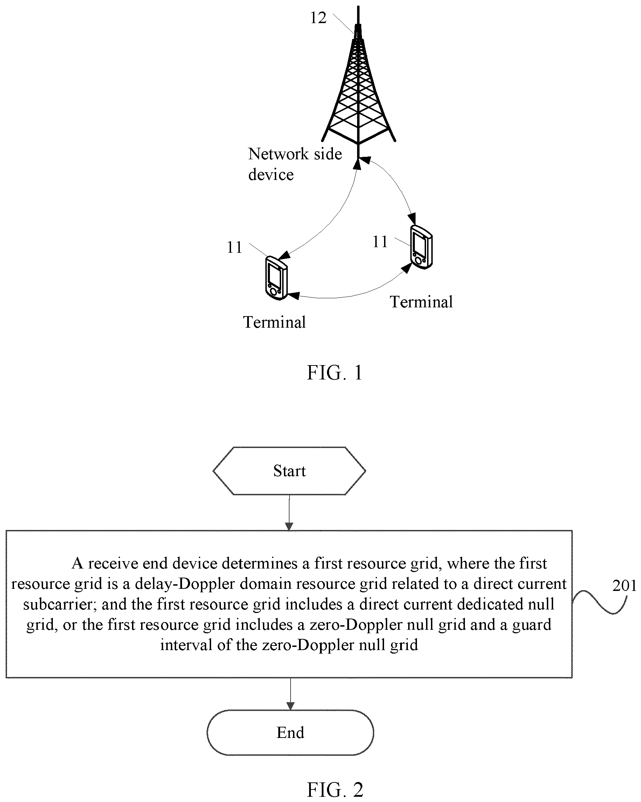

FIG. 1 is a structural diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, the following describes in detail a resource determining method provided in the embodiments of this application by using specific embodiments and application scenes thereof.

As shown in FIG. 2, an embodiment of this application provides a resource determining method, including:

Step 201: A receive end device determines a first resource grid, where the first resource grid is a delay-Doppler domain resource grid related to a direct current subcarrier.

The first resource grid includes a direct current dedicated null grid, or the first resource grid includes a zero-Doppler null grid and a guard interval of the zero-Doppler null grid.

In this embodiment of this application, the receive end device may be a network side device such as a base station, or may be a terminal device. The direct current dedicated null grid includes a zero-Doppler null grid and a guard interval of the zero-Doppler null grid.

In this embodiment of this application, a pilot grid, a guard interval of a pilot grid, and a data grid may be further determined. The pilot may be any pilot, such as a pulse pilot or a sequence pilot. In addition to the foregoing data and pilot, if there is another type of information transmission, a data grid and a pilot grid may be occupied, but the zero-Doppler null grid and the guard interval of the zero-Doppler null grid cannot be occupied, or the direct current dedicated null grid cannot be occupied.

According to the resource determining method in this embodiment of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

Optionally, the direct current dedicated null grid or the zero-Doppler null grid includes all grids with zero Doppler.

Herein, to prevent the data and the pilot from falling into the foregoing zero-Doppler null grid, a specific Doppler domain guard interval is required.

Optionally, the direct current dedicated null grid or the zero-Doppler null grid includes partial grids with zero Doppler.

Herein, to prevent the data and the pilot from falling into the foregoing null grid, a specific Doppler domain and/or delay domain guard interval is required.

Further, optionally, a quantity of the partial grids with zero Doppler is related to a jitter of a signal that is on a grid with zero Doppler and that is received by a receive end device.

The jitter includes at least an amplitude jitter of a signal. In a case that the direct current dedicated null grid or the zero-Doppler null grid includes partial grids with zero Doppler, a quantity of null grids is related to a jitter of a signal on different delay grids with zero Doppler. A large quantity of null grids is required when the jitter is large, and a small quantity of null grids is required when the jitter is small. The quantity of null grids needs to vary adaptively with A channel condition (for example, SNR) affecting the jitter. In this mode, only partial grids with zero Doppler need to be null every Q orthogonal time frequency space (Orthogonal Time Frequency Space, OTFS) grids, and a DC subcarrier noise response is estimated. An estimated value may be used not only for a current OTFS grid, but also for subsequent Q-1 OTFS grids, and a grid with zero Doppler in the subsequent Q-1 OTFS grids does not need to be null.

(Optionally, guard intervals of the direct current dedicated null grid or the zero-Doppler null grid and a pilot grid share a same grid.

Herein, to reduce overhead of a guard interval, a guard interval of a pilot grid and a guard interval of a null grid may be shared.

Assuming that positive and negative $K_P$ Doppler around a pilot in a Doppler domain needs to be null in the guard interval of the pilot grid, in order to share the guard interval, a distance between a placement location of the pilot and a boundary of the guard interval of the zero-Doppler null grid or a boundary of the direct current dedicated null grid does not exceed $K_P$ Doppler in the Doppler domain.

Optionally, the determining, by a receive end device, a first resource grid includes:

in a case that the receive end device is a terminal device, determining, by the receive end device, the first resource grid by receiving signaling sent by a network side device; or
in a case that the receive end device is a network side device, independently determining, by the receive end device, the first resource grid according to a first rule determined by the network side device. The first rule may be a Doppler quantity occupied by the guard interval of the zero-Doppler null grid or a Doppler quantity occupied by the direct current dedicated null grid, a Doppler distance between a border of the guard interval of the zero-Doppler null grid and the zero-Doppler null grid or a Doppler distance between a border of the direct current dedicated null grid and the zero-Doppler null grid that are determined according to a transmission environment (for example, a signal-to-noise ratio or a multipath environment) and a state (for example, a moving speed and a moving direction) of the transmit end device and the receive end device.

In this embodiment of this application, the foregoing signaling may be radio resource control (Radio Resource Control, RRC) signaling, physical downlink control channel (Physical Downlink Control Channel, PDCCH) signaling, a MEDIUM ACCESS CONTROL (Medium Access Control, MAC) control element (Control Element, CE), a system information block (System Information Block, SIB), or the like. That is, the network side may notify, by using the signaling, a terminal of an index of a pattern of a null or guard grid, where each pattern corresponds to one index, and a pattern of each index is defined in a protocol.

Optionally, the determining, by a receive end device, a first resource grid includes:
determining, by the receive end device, the first resource grid according to a criterion agreed upon in a protocol.

Further, optionally, the determining, by the transmit end device, the first resource grid according to a criterion agreed upon in a protocol includes:

determining, by the receive end device, the first resource grid according to the criterion agreed upon in the protocol and a target parameter, where
the criterion agreed upon in the protocol includes an association relationship between the first resource grid and the target parameter; and
the target parameter includes at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

In this embodiment of this application, the null or guard grid may be specified in the protocol, and a pattern of the foregoing null or guard grid is associated with the parameter of the OTFS. Each parameter corresponds to a pattern of one null or guard grid, that is, the terminal determines the pattern of the foregoing null or guard grid according to the protocol as long as the parameter of the OTFS is known.

Optionally, the resource determining method in this embodiment of this application further includes: performing, by the receive end device, data detection or pilot-based channel estimation on a grid with non-zero Doppler.

In a scheme in which the direct current dedicated null grid or the zero-Doppler null grid includes all grids with zero Doppler, the receive end needs to perform data detection or pilot-based channel estimation on the grid with non-zero Doppler, and information in the guard interval is normally used for data detection or pilot-based channel estimation.

Optionally, the resource determining method in this embodiment of this application further includes: estimating, by the receive end device, a response of direct current noise of a direct current subcarrier in a delay-Doppler domain according to at least partial grids in the first resource grid, to obtain a response estimation value.

Further, optionally, the resource determining method in this application further includes: performing, by the receive end device, data detection or pilot-based channel estimation after subtracting the response estimation value from a signal on at least one grid other than the first resource grid.

Herein, in a scheme in which the direct current dedicated null grid or the zero-Doppler null grid includes partial grids with zero Doppler, the receive end estimates the response of the direct current noise of the DC subcarrier in the delay-Doppler domain by using a null grid. After the response is estimated, the response is subtracted from data or a pilot grid with zero Doppler, and then data detection or pilot-based channel estimation is performed. Information in the guard interval is normally used for data detection or pilot-based channel estimation.

It should be noted that, in this embodiment of this application, the resource determining method is applicable to single-user and multi-user transmission.

The following describes the resource determining method in this application with reference to specific embodiments.

Embodiment 1: All grids with zero Doppler are null.

Consider an OTFS delay-Doppler grid with $M \times N$ dimensions, where M represents a quantity of grids in a delay domain, and N represents a quantity of grids in a Doppler domain. The maximum Doppler is $K_{MaxDopp}$ and the maximum delay is $L_{MaxDelay}$. Positive and negative $K_p$ Doppler and positive and negative $L_p$ delays around a pilot need to be null as a guard interval of the pilot.

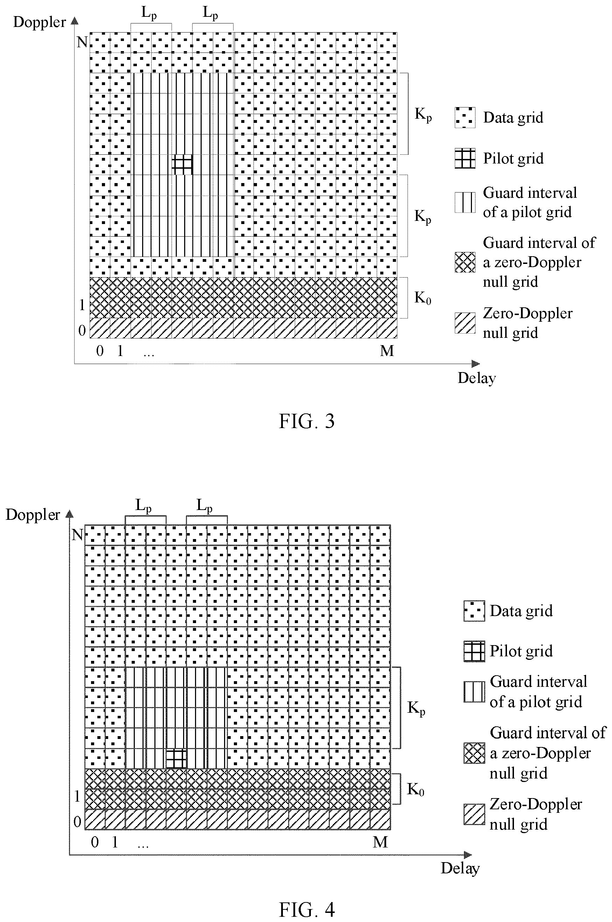

A scheme of five types of grids (a zero-Doppler null grid, a guard interval of the zero-Doppler null grid, a pilot grid, a guard interval of the pilot grid, and a data grid) is used as an example. As shown in FIG. 3, during sending, grids corresponding to all delays with zero Doppler are null. In addition to a grid with zero Doppler, a guard interval needs to be set in the Doppler domain to prevent data and/or a pilot from falling into the grid with zero Doppler after experiencing a delay-Doppler domain channel. The guard interval in the Doppler domain needs to be set to $K_0$ Doppler, where $K_0 > K_{MaxDopp}$. Therefore, additional resource overheads are at least $(K_0+1) \times M$ grids.

In a scheme of four types of grids (a direct current dedicated null grid, a pilot grid, a guard interval of the pilot grid, and a data grid), the zero-Doppler null grid and a guard interval of a null grid in the scheme of five types of grids are collectively referred to as the direct current dedicated null grid.

A network side may notify, through signaling (RRC, a PDCCH, a MAC CE, an SIB, or the like), a terminal of an index of a pattern of the foregoing null or guard grid, where each pattern corresponds to one index, and a pattern of each index is defined in a protocol. Alternatively, the foregoing null or guard grid may be specified in a protocol, and a pattern of the foregoing null or guard grid is associated with a parameter of OTFS, where each parameter corresponds to one pattern of a null or guard grid, that is, the terminal determines the pattern of the foregoing null or guard grid according to the protocol as long as the parameter of OTFS is known.

For a transmit end device, a pilot and a guard interval thereof, and data need to be placed outside the foregoing zero-Doppler null grid and the null grid, and there is the sufficient guard interval around the pilot (the Doppler domain and the delay domain) to avoid mutual interference between the data and the pilot. For a receive end device, data detection or pilot-based channel estimation is performed on a grid with non-zero Doppler, all grids with zero Doppler are processed as 0, and information in the guard interval is normally used for data detection or pilot-based channel estimation.

To reduce overheads of the guard interval, a part of the guard interval of the pilot and the guard interval of the null grid (the scheme of five types of grids) or the direct current dedicated null grid (the scheme of four types of grids) may be shared. FIG. 4 describes a case that the guard interval of the pilot and the guard interval of the null grid are shared in the scheme of five types of grids. A distance between a placement location of this pilot and a boundary of the guard interval of the null grid (the scheme of five types of grids) or a boundary of the direct current dedicated null grid (the scheme of four types of grids) does not exceed $K_P$ Doppler in the Doppler domain. If this distance is exceeded, there is no shared guard interval.

In a multi-user scene, resource areas of a plurality of users are normally divided on grids for transmission, and a null grid with zero Doppler and a guard interval of the null grid are not occupied.

This scheme is easy to operate and has advantage compared with a conversational scheme of nulling in time and frequency domain: In NR OFDM, a location of a DC is uncertain. To enable a DC subcarrier to be null, specific signaling interaction is required to notify transmit and receive parties of a specific null location. However, in OTFS, a DC response has always been at zero Doppler. Therefore, nulling of a grid with zero Doppler does not bring additional signaling overheads.

Embodiment 2: Partial grids with zero Doppler are null.

Consider an OTFS delay-Doppler grid with M×N dimensions, where M represents a quantity of grids in a delay domain, and N represents a quantity of grids in a Doppler domain. The maximum Doppler is $K_{MaxDopp}$ and the maximum delay is $L_{MaxDelay}$. Positive and negative $K_p$ Doppler and positive and negative $L_p$ delays around a pilot need to be null as a guard interval of the pilot.

A scheme of five types of grids (a zero-Doppler null grid, a guard interval of the zero-Doppler null grid, a pilot grid, a guard interval of the pilot grid, and a data grid) is used as an example. During sending, partial grids with zero Doppler are null (a quantity of null grids is denoted as $\Gamma$), and data or a pilot is still played at another location. A receive end estimates a response of direct current noise in a DC subcarrier in the delay-Doppler domain by using the null $\Gamma$ grids. After the response is estimated, the response is subtracted from data or pilot grids with zero Doppler, then data detection or pilot-based channel estimation is performed, all the null $\Gamma$ grids are processed as 0, and information in the guard interval is normally used for data detection or pilot-based channel estimation.

In a scheme of four types of grids (a direct current dedicated null grid, a pilot grid, a guard interval of the pilot grid, and a data grid), the zero-Doppler null grid and a guard interval of a null grid in the scheme of five types of grids are collectively referred to as the direct current dedicated null grid.

A network side may notify, through signaling (RRC, a PDCCH, a MAC CE, an SIB, or the like), a terminal of an index of a pattern of the foregoing null or guard grid, where each pattern corresponds to one index, and a pattern of each index is defined in a protocol. Alternatively, the foregoing null or guard grid may be specified in a protocol, and a pattern of the foregoing null or guard grid is associated with a parameter of OTFS, where each parameter corresponds to one pattern of a null or guard grid, that is, the terminal determines the pattern of the foregoing null or guard grid according to the protocol as long as the parameter of OTFS is known.

A quantity of null grids is related to a jitter on different delay grids with zero Doppler. More null grids are required when the jitter is large, and fewer null grids are required when the jitter is small. The jitter is mainly related to noise (signal-to-noise ratio). The greater the noise (the lower the signal-to-noise ratio), the greater the jitter, because the response of the direct current noise in the DC subcarrier in the delay-Doppler domain can be estimated on each grid with zero Doppler. However, in addition to the response of the direct current noise in the DC subcarrier in the delay-Doppler domain, a grid with zero Doppler at the receive end includes impact of noise on a transmission channel. When the SNR is relatively high and the noise of the transmission channel is relatively low, the response of the direct current noise in the DC subcarrier in the delay-Doppler domain can be better estimated by using relatively small $\Gamma$. However, when the SNR is relatively low and the noise of the transmission channel is relatively large, relatively large $\Gamma$ (averaging or combination) is required to better estimate the response of the direct current noise in the DC subcarrier in the delay-Doppler domain. Therefore, the quantity of null grids with zero Doppler varies adaptively with the SNR.

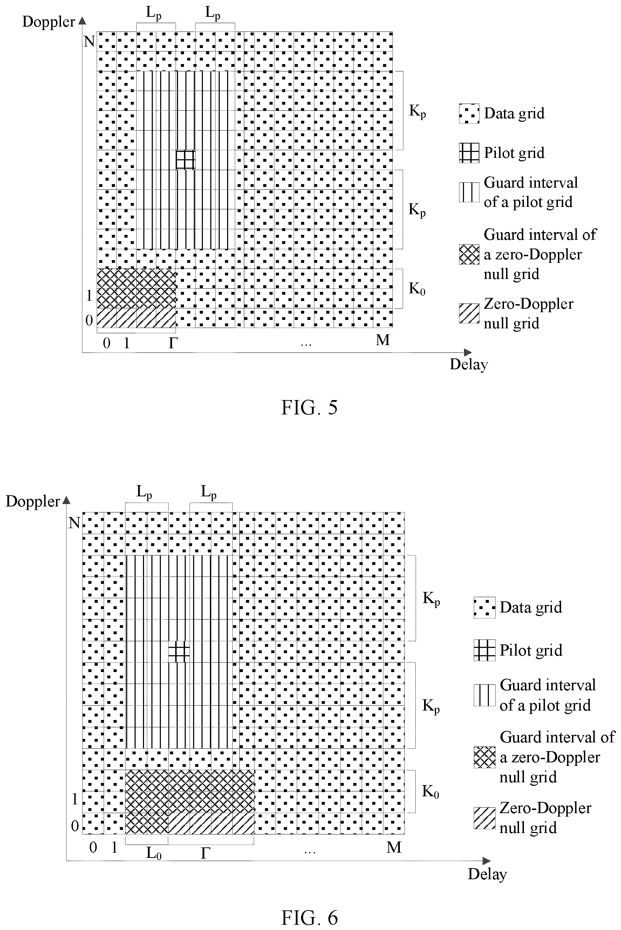

Partial grids around the null grid with zero Doppler (the Doppler domain and the delay domain) further need to be null as a guard interval to prevent data and a pilot from falling into the null grid with zero Doppler after experiencing a channel. If a null location begins at 0 in the delay domain (as shown in FIG. 5), a guard interval $K_0$ in the Doppler domain needs to be greater than $K_{MaxDopp}$ Doppler, and no guard interval is required in the delay domain (because data only generates a forward delay). In this case, total overheads are $(K_0+1)\times\Gamma$ grids. If a null location begins at non-0 in the delay domain (as shown in FIG. 6), a guard interval $K_0$ in the Doppler domain needs to be greater than $K_{MaxDopp}$ Doppler, and a guard interval $L_0$ in the delay domain needs to be greater than $L_{MaxDelay}$ delays (because data only generates a forward delay). In this case, total overheads are $(K_0+1)\times(L_0+\Gamma)$ grids.

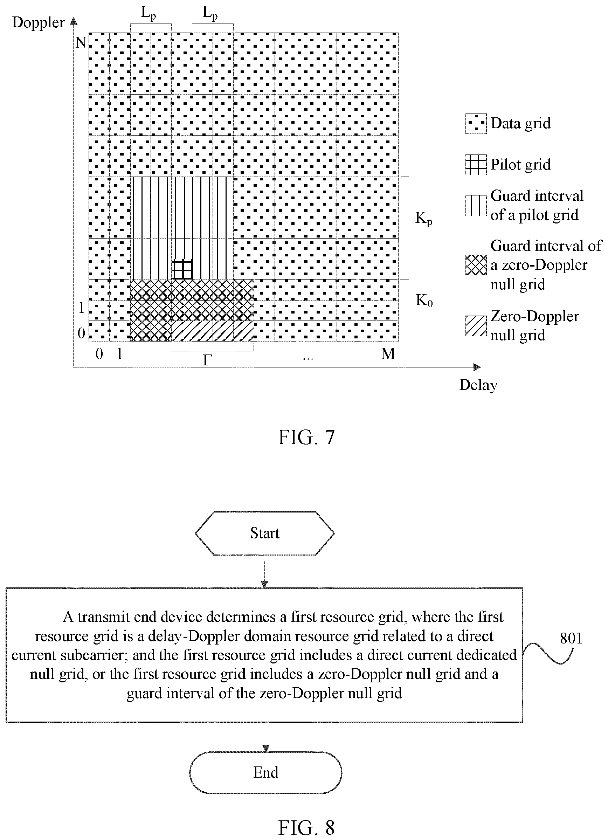

To reduce overheads of the guard interval, a part of the guard interval of the pilot and the guard interval of the null grid (the scheme of five types of grids) or the direct current dedicated null grid (the scheme of four types of grids) may be shared. FIG. 7 describes a case that the guard interval of the pilot and the guard interval of the null grid are shared in the scheme of five types of grids. A distance between a placement location of this pilot and a boundary of the guard interval of the null grid (the scheme of five types of grids) or a boundary of the direct current dedicated null grid (the scheme of four types of grids) does not exceed $K_P$ Doppler in the Doppler domain. If this distance is exceeded, there is no shared guard interval.

$$Q \left( 1 \le Q \le \left\lfloor \frac{T_V}{N} \right\rfloor \right)$$

At an interval of $Q \left( 1 \le Q \le \left\lfloor \frac{T_V}{N} \right\rfloor \right)$ OTFS grids, null (and a corresponding guard interval) need to be configured at zero Doppler to estimate a response of a direct current DC subcarrier in the delay-Doppler domain (the estimated value may be used for consecutive Q OTFS grids), where $T_V$ represents a quantity of symbols (a quantity of OFDM symbols) at which the direct current DC continuously remains constant in time-frequency domain, and $\lfloor \; \rfloor$ represents rounding down. In principle, null and a guard interval do not need to be configured for each OTFS delay-Doppler grid with M×N dimensions because the direct current DC subcarrier is relatively stable and changes slowly with time. In addition, direct current DC subcarrier information of N OFDM symbols in time-frequency domain is included in each grid with zero Doppler, and is averaged in the delay-Doppler domain, so that a change in the delay-Doppler domain is slower.

For a plurality of users, the above null and guard interval are still used. In an uplink, a base station estimates a response of DC subcarriers of all terminals in the delay-Doppler domain. Regardless of a terminal to which another data grid with zero Doppler is allocated, detection or channel estimation is performed after an estimated value of the foregoing "response of DC subcarriers of all terminals in the delay-Doppler domain" is subtracted from the received data or pilot. In a downlink, the terminal estimates a response of a DC subcarrier of the terminal in the delay-Doppler domain. In view of the above, no additional overheads are required for a plurality of users.

According to the resource determining method in this embodiment of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

As shown in FIG. 8, an embodiment of this application further provides a resource configuration method, including:

Step 801: A transmit end device determines a first resource grid, where the first resource grid is a delay-Doppler domain resource grid related to a direct current subcarrier.

The first resource grid includes a direct current dedicated null grid, or the first resource grid includes a zero-Doppler null grid and a guard interval of the zero-Doppler null grid.

In this embodiment of this application, the transmit end device may be a network side device such as a base station, or may be a terminal device. The direct current dedicated null grid includes a zero-Doppler null grid and a guard interval of the zero-Doppler null grid.

In this embodiment of this application, a pilot grid, a guard interval of a pilot grid, and a data grid may be further determined. The pilot may be any pilot, such as a pulse pilot or a sequence pilot. In addition to the foregoing data and pilot, if there is another type of information transmission, a data grid and a pilot grid may be occupied, but the zero-Doppler null grid and the guard interval of the zero-Doppler null grid cannot be occupied, or the direct current dedicated null grid cannot be occupied.

According to the resource determining method in this embodiment of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

Optionally, the direct current dedicated null grid or the zero-Doppler null grid includes all grids with zero Doppler.

Optionally, the direct current dedicated null grid or the zero-Doppler null grid includes partial grids with zero Doppler.

Optionally, a quantity of the partial grids with zero Doppler is related to a jitter of a signal that is on a grid with zero Doppler and that is received by a receive end device.

Optionally, guard intervals of the direct current dedicated null grid or the zero-Doppler null grid and a pilot grid share a same grid.

Optionally, the resource configuration method in this application further includes:

in a case that the transmit end device is a network side device, independently determining, by the transmit end device, the first resource grid according to a first rule determined by the network side device; or
in a case that the transmit end device is a terminal device, determine, by the transmit end device, the first resource grid by receiving signaling sent by a network side device.

Optionally, the determining, by a transmit end device, a first resource grid includes:
determining, by the transmit end device, the first resource grid according to a criterion agreed upon in a protocol.

Optionally, the determining, by the transmit end device, the first resource grid according to a criterion agreed upon in a protocol includes:

determining, by the transmit end device, the first resource grid according to the criterion agreed upon in the protocol and a target parameter, where

the criterion agreed upon in the protocol includes an association relationship between the first resource grid and the target parameter; and
the target parameter includes at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

Optionally, the resource configuration method in this embodiment of this application further includes: configuring, by the transmit end device, data or a guard interval of a pilot on a grid other than the first resource grid.

It should be noted that the resource configuration method in this embodiment of this application is a method corresponding to the foregoing resource determining method, and details are not described herein again.

According to the resource configuration method in this embodiment of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

It should be noted that the resource determining method provided in this embodiment of this application may be performed by a resource determining apparatus, or a control module that is in the resource determining apparatus and that is configured to perform the resource determining method. In the embodiments of this application, that the resource determining apparatus performs the resource determining method is used as an example to describe the resource determining apparatus provided in the embodiments of this application.

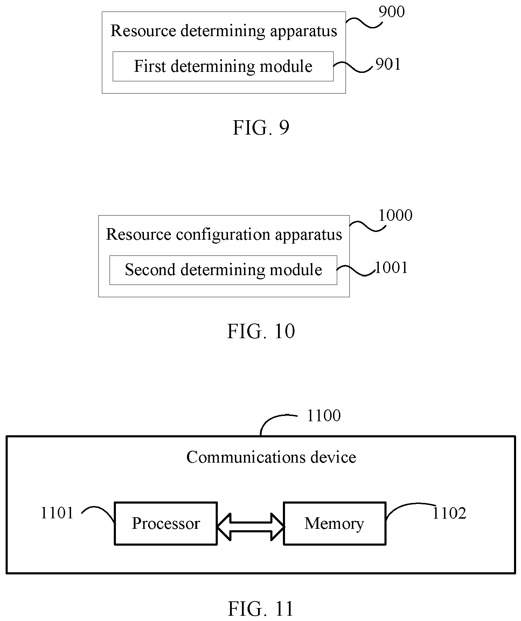

As shown in FIG. 9, an embodiment of this application provides a resource determining apparatus 900, including:

a first determining module 900, configured to determine a first resource grid, where the first resource grid is a delay-Doppler domain resource grid related to a direct current subcarrier; and
the first resource grid includes a direct current dedicated null grid, or the first resource grid includes a zero-Doppler null grid and a guard interval of the zero-Doppler null grid.

Optionally, the resource determining apparatus in this embodiment of this application further includes: a third determining module, configured to determine a pilot grid, a guard interval of a pilot grid, and a data grid.

In the resource determining apparatus in this embodiment of this application, the direct current dedicated null grid or the zero-Doppler null grid includes all grids with zero Doppler.

In the resource determining apparatus in this embodiment of this application, the direct current dedicated null grid or the zero-Doppler null grid includes partial grids with zero Doppler.

In the resource determining apparatus in this embodiment of this application, a quantity of the partial grids with zero Doppler is related to a jitter of a signal that is on a grid with zero Doppler and that is received by the receive end device.

In the resource determining apparatus in this embodiment of this application, guard intervals of the direct current dedicated null grid or the zero-Doppler null grid and a pilot grid share a same grid.

In the resource determining apparatus in this embodiment of this application, the first determining module is configured to: in a case that the receive end device is a terminal device, determine the first resource grid by receiving signaling sent by a network side device; or

in a case that the receive end device is a network side device, independently determine the first resource grid according to a first rule determined by the network side device.

In the resource determining apparatus in this embodiment of this application, the first determining module is configured to determine the first resource grid according to a criterion agreed upon in a protocol.

In the resource determining apparatus in this embodiment of this application, the first determining module is configured to determine the first resource grid according to the criterion agreed upon in the protocol and a target parameter, where

the criterion agreed upon in the protocol includes an association relationship between the first resource grid and the target parameter; and
the target parameter includes at least one of the following:

a parameter of orthogonal time frequency space OTFS;
a quantity of Doppler domain resource grids;
a quantity of delay domain resource grids;

a quantity of delay-Doppler domain resource grids; and

a symplectic Fourier transform dimension.

The resource determining apparatus in this embodiment of this application further includes:

a first processing module, configured to perform data detection or pilot-based channel estimation on a grid with non-zero Doppler.

The resource determining apparatus in this embodiment of this application further includes:

a second processing module, configured to estimate a response of direct current noise of a direct current subcarrier in a delay-Doppler domain according to at least partial grids in the first resource grid, to obtain a response estimation value.

The resource determining apparatus in this embodiment of this application further includes:

a third processing module, configured to perform data detection or pilot-based channel estimation after subtracting the response estimation value from a signal on at least one grid other than the first resource grid.

According to the resource determining apparatus in this embodiment of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

The resource determining apparatus provided in this embodiment of this application can implement the processes implemented in the method embodiments in FIG. 2 to FIG. 7, and achieve a same technical effect. To avoid repetition, details are not described herein again.

As shown in FIG. 10, an embodiment of this application further provides a resource configuration apparatus 1000, including:

a second determining module 1001, configured to determine a first resource grid, where the first resource grid is a delay-Doppler domain resource grid related to a direct current subcarrier; and
the first resource grid includes a direct current dedicated null grid, or the first resource grid includes a zero-Doppler null grid and a guard interval of the zero-Doppler null grid.

Optionally, the resource configuration apparatus in this embodiment of this application further includes:

a fourth determining module, configured to determine a pilot grid, a guard interval of a pilot grid, and a data grid.

In the resource configuration apparatus in this embodiment of this application, the direct current dedicated null grid or the zero-Doppler null grid includes all grids with zero Doppler.

In the resource configuration apparatus in this embodiment of this application, the direct current dedicated null grid or the zero-Doppler null grid includes partial grids with zero Doppler.

In the resource configuration apparatus in this embodiment of this application, a quantity of the partial grids with zero Doppler is related to a jitter of a signal that is on a grid with zero Doppler and that is received by a receive end device.

In the resource configuration apparatus in this embodiment of this application, guard intervals of the direct current dedicated null grid or the zero-Doppler null grid and a pilot grid share a same grid.

In the resource configuration apparatus in this embodiment of this application, the second determining module is configured to: in a case that a transmit end device is a network side device, independently determine the first resource grid according to a first rule determined by the network side device; or

in a case that a transmit end device is a terminal device, determine the first resource grid by receiving signaling sent by a network side device.

In the resource configuration apparatus in this embodiment of this application, the second determining module is configured to determine, by the transmit end device, the first resource grid according to a criterion agreed upon in a protocol.

In the resource configuration apparatus in this embodiment of this application, the second determining module is configured to determine, by the transmit end device, the first resource grid according to the criterion agreed upon in the protocol and a target parameter, where

the criterion agreed upon in the protocol includes an association relationship between the first resource grid and the target parameter; and
the target parameter includes at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

The resource configuration apparatus in this embodiment of this application further includes:

a second processing module, configured to configure data or a guard interval of a pilot on a grid other than the first resource grid.

According to the resource configuration apparatus in this embodiment of this application, a first resource grid is determined, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

The resource determining apparatus provided in this embodiment of this application can implement the processes implemented in the method embodiment in FIG. 9, and achieve a same technical effect. To avoid repetition, details are not described herein again.

The resource determining apparatus and the resource configuration apparatus may be a terminal or a network side device, and may be a component, an integrated circuit, or a chip in the terminal. The apparatus may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application. The resource determining apparatus and the resource configuration apparatus in the embodiments of this application may be an apparatus with an operating system. The operating system may be an Android (Android) operating system, an iOS operating system, or another possible operating system. This is not specifically limited in this embodiment of this application.

Optionally, as shown in FIG. 11, an embodiment of this application further provides a communication device 1100, including a processor 1101, a memory 1102, and a program or an instruction that is stored in the memory 1102 and that can be run on the processor 1101. The communication device 1100 is a terminal or a network side device, and the program or the instruction is executed by the processor 1101 to implement the processes of the foregoing resource determining method embodiment or the processes of the foregoing resource configuration method embodiment, and a same technical effect can be achieved. To avoid repetition, details are not described herein again.

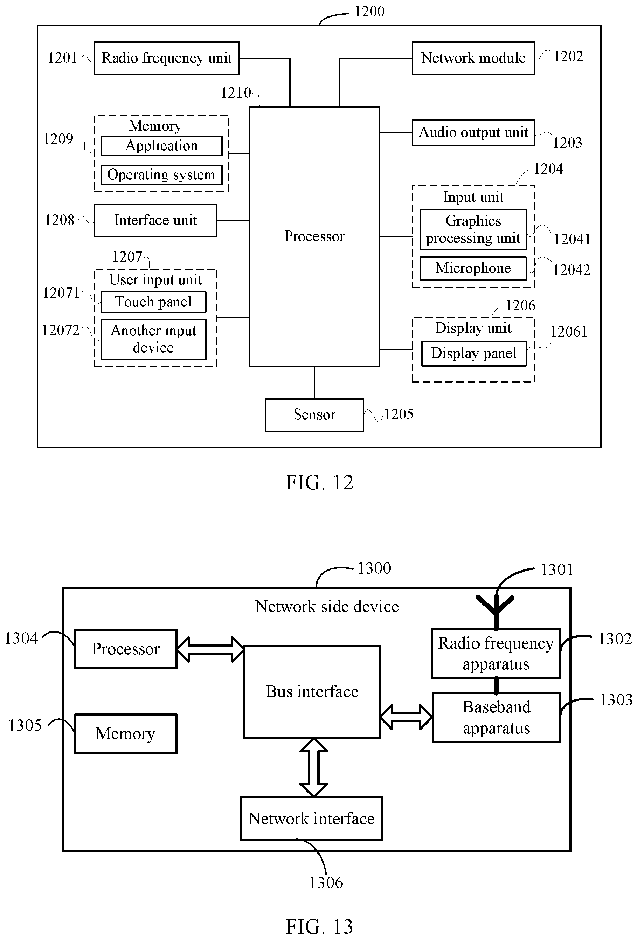

The resource determining apparatus and the resource configuration apparatus in the embodiments of this application may be a terminal or a network side device. When the resource determining apparatus and the resource configuration apparatus are a terminal, a schematic diagram of a hardware structure of the terminal is shown in FIG. 12, including but not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the terminal 1200 may further include a power supply (such as a battery) that supplies power to each component. The power supply may be logically connected to the processor 1210 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1210 for processing; and sends uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 1209 may mainly include a program or instruction storage area and a data storage area. The program or instruction storage area may store an operating system, and an application or an instruction required by at least one function (for example, a sound playing function or an image playing function). In addition, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1210 may include one or more processing units. Optionally, an application processor and a modem processor may be integrated into the processor 1210. The application processor mainly processes an operating system, a user interface, an application, an instruction, or the like. The modem processor mainly processes wireless communications, for example, a baseband processor. It can be understood that, alternatively, the modem processor may not be integrated into the processor 1210.

The processor 1210 is configured to determine a first resource grid, where the first resource grid is a delay-Doppler domain resource grid related to a direct current subcarrier; and

the first resource grid includes a direct current dedicated null grid, or the first resource grid includes a zero-Doppler null grid and a guard interval of the zero-Doppler null grid.

Optionally, the direct current dedicated null grid or the zero-Doppler null grid includes all grids with zero Doppler.

Optionally, the direct current dedicated null grid or the zero-Doppler null grid includes partial grids with zero Doppler.

Optionally, a quantity of the partial grids with zero Doppler is related to a jitter of a signal that is on a grid with zero Doppler and that is received by a receive end device.

Optionally, guard intervals of the direct current dedicated null grid or the zero-Doppler null grid and a pilot grid share a same grid.

Optionally, the processor 1210 is further configured to:

in a case that the receive end device is a terminal device, determine the first resource grid by receiving signaling sent by a network side device; or
in a case that the receive end device is a network side device, independently determine the first resource grid according to a first rule determined by the network side device.

Optionally, the processor 1210 is further configured to:
determine the first resource grid according to a criterion agreed upon in a protocol.

Optionally, the processor 1210 is further configured to:

determine the first resource grid according to the criterion agreed upon in the protocol and a target parameter, where
the criterion agreed upon in the protocol includes an association relationship between the first resource grid and the target parameter; and
the target parameter includes at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

In an optional implementation, the processor 1210 is further configured to:
perform data detection or pilot-based channel estimation on a grid with non-zero Doppler.

Optionally, the processor 1210 is further configured to:
estimate a response of direct current noise of a direct current subcarrier in a delay-Doppler domain according to at least partial grids in the first resource grid, to obtain a response estimation value.

Optionally, the processor 1210 is further configured to:
perform data detection or pilot-based channel estimation after subtracting the response estimation value from a signal on at least one grid other than the first resource grid.

In another optional implementation, the processor 1210 is further configured to configure data or a guard interval of a pilot on a grid other than the first resource grid.

In this embodiment of this application, the foregoing terminal determines a first resource grid, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid. Because a response location of direct current subcarrier noise in a delay-Doppler domain is fixed, impact of the direct current subcarrier noise on data may be suppressed by performing resource nulling in the delay-Doppler domain or estimating a response of the direct current subcarrier noise in the delay-Doppler domain by using the first resource grid, thereby reducing signaling overheads and processing complexity on the premise of ensuring service reliability.

In a case that the resource determining apparatus and the resource configuration apparatus are a network side device, as shown in FIG. 13, the network side device may include an antenna 1301, a radio frequency apparatus 1302, and a baseband apparatus 1303. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes information that needs to be sent, and sends processed information to the radio frequency apparatus 1302. The radio frequency apparatus 1302 processes the received information, and sends processed information by using the antenna 1301.

The frequency band processing apparatus may be located in the baseband apparatus 1303. The method performed by the network side device in the foregoing embodiment may be implemented in the baseband apparatus 1303. The baseband apparatus 1303 includes a processor 1304 and a memory 1305.

The baseband apparatus 1303 may include, for example, at least one baseband board, where a plurality of chips are disposed on the baseband board. As shown in FIG. 13, one chip is, for example, the processor 1304, which is connected to the memory 1305, so as to invoke a program in the memory 1305 to perform the operations of the foregoing resource determining method or resource configuration method embodiment.

The baseband apparatus 1303 may further include a network interface 1306, configured to exchange information with the radio frequency apparatus 1302. For example, the interface is a common public radio interface (common public radio interface, CPRI for short).

Specifically, the network side device in this embodiment of the present invention further includes an instruction or a program that is stored in the memory 1305 and that can be run on the processor 1304. The processor 1304 invokes the instruction or the program in the memory 1305 to perform the method performed by the modules shown in FIG. 9 or FIG. 10, and a same technical effect is achieved. To avoid repetition, details are not described herein again.

An embodiment of this application further provides a readable storage medium. The readable storage medium stores a program or an instruction, and the program or the instruction is executed by a processor to implement the processes of the foregoing resource configuration method or resource determining method embodiment, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing resource determining method or resource configuration method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

**Claims**

1. A resource determining method, comprising:

   determining, by a receive end device, a first resource grid, wherein the first resource grid is a delay-Doppler domain resource grid related to a direct current subcarrier; and
   the first resource grid comprises a direct current dedicated null grid, or the first resource grid comprises a zero-Doppler null grid and a guard interval of the zero-Doppler null grid.

2. The resource determining method according to claim 1, wherein the direct current dedicated null grid or the zero-Doppler null grid comprises all grids with zero Doppler.

3. The resource determining method according to claim 1, wherein the direct current dedicated null grid or the zero-Doppler null grid comprises partial grids with zero Doppler.

4. The resource determining method according to claim 3, wherein a quantity of the partial grids with zero Doppler is related to a jitter of a signal that is on a grid with zero Doppler and that is received by the receive end device.

5. The resource determining method according to claim 1, wherein guard intervals of the direct current dedicated null grid or the zero-Doppler null grid and a pilot grid share a same grid.

6. The resource determining method according to claim 1, wherein the determining, by a receive end device, a first resource grid comprises:

   in a case that the receive end device is a terminal device, determining, by the receive end device, the first resource grid by receiving signaling sent by a network side device; or
   in a case that the receive end device is a network side device, independently determining, by the receive end device, the first resource grid according to a first rule determined by the network side device.

7. The resource determining method according to claim 1, wherein the determining, by a receive end device, a first resource grid comprises:
   determining, by the receive end device, the first resource grid according to a criterion agreed upon in a protocol.

8. The resource determining method according to claim 7, wherein the determining, by the receive end device, the first resource grid according to a criterion agreed upon in a protocol comprises:

   determining, by the receive end device, the first resource grid according to the criterion agreed upon in the protocol and a target parameter, wherein
   the criterion agreed upon in the protocol comprises an association relationship between the first resource grid and the target parameter; and
   the target parameter comprises at least one of the following:

   a parameter of orthogonal time frequency space OTFS;
   a quantity of Doppler domain resource grids;
   a quantity of delay domain resource grids;
   a quantity of delay-Doppler domain resource grids; and
   a symplectic Fourier transform dimension.

9. The resource determining method according to claim 2, further comprising:
   performing, by the receive end device, data detection or pilot-based channel estimation on a grid with non-zero Doppler.

10. The resource determining method according to claim 3, further comprising:
    estimating, by the receive end device, a response of direct current noise of a direct current subcarrier in a delay-Doppler domain according to at least partial grids in the first resource grid, to obtain a response estimation value.

11. The resource determining method according to claim 10, further comprising:
    performing, by the receive end device, data detection or pilot-based channel estimation after subtracting the response estimation value from a signal on at least one grid other than the first resource grid.

12. A resource configuration method, comprising:

    determining, by a transmit end device, a first resource grid, wherein the first resource grid is a delay-Doppler domain resource grid related to a direct current subcarrier; and
    the first resource grid comprises a direct current dedicated null grid, or the first resource grid comprises a zero-Doppler null grid and a guard interval of the zero-Doppler null grid.

13. The resource configuration method according to claim 12, wherein the direct current dedicated null grid or the zero-Doppler null grid comprises all grids with zero Doppler.

14. The resource configuration method according to claim 12, wherein the direct current dedicated null grid or the zero-Doppler null grid comprises partial grids with zero Doppler.

15. The resource configuration method according to claim 12, wherein a quantity of the partial grids with zero Doppler is related to a jitter of a signal that is on a grid with zero Doppler and that is received by a receive end device.

16. The resource configuration method according to claim 12, wherein guard intervals of the direct current dedicated null grid or the zero-Doppler null grid and a pilot grid share a same grid.

17. The resource configuration method according to claim 12, wherein the determining, by a transmit end device, a first resource grid comprises:

in a case that the transmit end device is a network side device, independently determining, by the transmit end device, the first resource grid according to a first rule determined by the network side device; or
in a case that the transmit end device is a terminal device, determining, by the transmit end device, the first resource grid by receiving signaling sent by a network side device.

18. The resource configuration method according to claim 12, wherein the determining, by a transmit end device, a first resource grid comprises:
determining, by the transmit end device, the first resource grid according to a criterion agreed upon in a protocol.

19. The resource configuration method according to claim 18, wherein the determining, by the transmit end device, the first resource grid according to a criterion agreed upon in a protocol comprises:

determining, by the transmit end device, the first resource grid according to the criterion agreed upon in the protocol and a target parameter, wherein
the criterion agreed upon in the protocol comprises an association relationship between the first resource grid and the target parameter; and
the target parameter comprises at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

20. The resource configuration method according to claim 12, further comprising:
configuring, by the transmit end device, data or a guard interval of a pilot on a grid other than the first resource grid.

21. A resource determining apparatus, comprising:

a first determining module, configured to determine a first resource grid, wherein the first resource grid is a delay-Doppler domain resource grid related to a direct current subcarrier; and
the first resource grid comprises a direct current dedicated null grid, or the first resource grid comprises a zero-Doppler null grid and a guard interval of the zero-Doppler null grid.

22. The resource determining apparatus according to claim 21, wherein the first determining module is configured to: in a case that the receive end device is a terminal device, determine the first resource grid by receiving signaling sent by a network side device; or in a case that the receive end device is a network side device, independently determine the first resource grid according to a first rule determined by the network side device.

23. The resource determining apparatus according to claim 21, wherein the first determining module is configured to determine the first resource grid according to a criterion agreed upon in a protocol.

24. The resource determining apparatus according to claim 23, wherein the first determining module is configured to determine the first resource grid according to the criterion agreed upon in the protocol and a target parameter, wherein

the criterion agreed upon in the protocol comprises an association relationship between the first resource grid and the target parameter; and
the target parameter comprises at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

**25.** A resource configuration apparatus, comprising:

a second determining module, configured to determine a first resource grid, wherein the first resource grid is a delay-Doppler domain resource grid related to a direct current subcarrier; and

the first resource grid comprises a direct current dedicated null grid, or the first resource grid comprises a zero-Doppler null grid and a guard interval of the zero-Doppler null grid.

**26.** The resource configuration apparatus according to claim 25, wherein the second determining module is configured to: in a case that a transmit end device is a network side device, independently determine, by the transmit end device, the first resource grid according to a first rule determined by the network side device; or

in a case that a transmit end device is a terminal device, determine, by the transmit end device, the first resource grid by receiving signaling sent by a network side device.

**27.** The resource configuration apparatus according to claim 25, wherein the second determining module is configured to determine the first resource grid according to a criterion agreed upon in a protocol.

**28.** The resource configuration apparatus according to claim 27, wherein the second determining module is configured to determine the first resource grid according to the criterion agreed upon in the protocol and a target parameter, wherein

the criterion agreed upon in the protocol comprises an association relationship between the first resource grid and the target parameter; and the target parameter comprises at least one of the following:

a parameter of orthogonal time frequency space OTFS;
a quantity of Doppler domain resource grids;
a quantity of delay domain resource grids;
a quantity of delay-Doppler domain resource grids; and
a symplectic Fourier transform dimension.

**29.** A communication device, comprising a processor, a memory, and a program or an instruction that is stored in the memory and that can be run on the processor, wherein the program or the instruction is executed by the processor to implement the steps of the resource determining method according to any one of claims 1 to 11 or the steps of the resource configuration method according to any one of claims 12 to 20.

**30.** A readable storage medium, wherein the readable storage medium stores a program or an instruction, and the program or the instruction is executed by a processor to implement the steps of the resource determining method according to any one of claims 1 to 11 or the steps of the resource configuration method according to any one of claims 12 to 20.

**31.** A chip, comprising a processor and a communication interface, wherein the communication interface is coupled to the processor, and the processor is configured to run a program or an instruction to implement the steps of the resource determining method according to any one of claims 1 to 11 or the steps of the resource configuration method according to any one of claims 12 to 20.

**32.** A computer program product, wherein the computer program product is stored in a non-transitory storage medium, and the computer program product is executed by at least one processor to implement the steps of the resource determining method according to any one of claims 1 to 11 or the steps of the resource configuration method according to any one of claims 12 to 20.

12

Network side
device

11                          11

Terminal

Terminal

FIG. 1

Start

A receive end device determines a first resource grid, where the first
resource grid is a delay-Doppler domain resource grid related to a direct current
subcarrier; and the first resource grid includes a direct current dedicated null
grid, or the first resource grid includes a zero-Doppler null grid and a guard
interval of the zero-Doppler null grid

201

End

FIG. 2

FIG. 3

FIG. 4

FIG. 5

FIG. 6

FIG. 7

A transmit end device determines a first resource grid, where the first resource grid is a delay-Doppler domain resource grid related to a direct current subcarrier; and the first resource grid includes a direct current dedicated null grid, or the first resource grid includes a zero-Doppler null grid and a guard interval of the zero-Doppler null grid

801

FIG. 8

Resource determining apparatus ⟋900

First determining module ⟋901

FIG. 9

Resource configuration apparatus ⟋1000

Second determining module ⟋1001

FIG. 10

1100

Communications device

1101 Processor ⟷ Memory 1102

FIG. 11

FIG. 12

FIG. 13

## INTERNATIONAL SEARCH REPORT

| International application No. |
| --- |
| **PCT/CN2022/075498** |

**A. CLASSIFICATION OF SUBJECT MATTER**

H04L 5/00(2006.01)i; H04L 27/26(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; ENTXTC; WPABS; CJFD; CNKI; 3GPP: 直流, 子载波, 网格, 栅格, 时延, 延迟, 多普勒, 保护间隔, 零, 留空, 空白, 干扰, DC, derect current, subcarrier, grid, delay, Doppler, GI, guard interval, zero, idle, interference

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021001278 A1 (VOLKSWAGEN AG) 07 January 2021 (2021-01-07) claims 1-12 | 1-32 |
| A | CN 112235223 A (BEIJING UNIVERSITY OF POSTS AND TELECOMMUNICATIONS) 15 January 2021 (2021-01-15) entire document | 1-32 |
| A | WO 2018028614 A1 (HUAWEI TECHNOGOLY CO., LTD.) 15 February 2018 (2018-02-15) entire document | 1-32 |
| A | CN 108781072 A (COHERE TECHNOLOGIES) 09 November 2018 (2018-11-09) entire document | 1-32 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 March 2022** | **01 April 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 293 945 A1

**INTERNATIONAL SEARCH REPORT**
**Information on patent family members**

International application No.

**PCT/CN2022/075498**

| Patent document cited in search report | | | Publication date (day/month/year) | Patent family member(s) | | | Publication date (day/month/year) |
|---|---|---|---|---|---|---|---|
| WO | 2021001278 | A1 | 07 January 2021 | EP | 3761583 | A1 | 06 January 2021 |
| CN | 112235223 | A | 15 January 2021 | None | | | |
| WO | 2018028614 | A1 | 15 February 2018 | None | | | |
| CN | 108781072 | A | 09 November 2018 | KR | 20190008174 | A | 23 January 2019 |
| | | | | WO | 2017100666 | A1 | 15 June 2017 |
| | | | | EP | 3387748 | A1 | 17 October 2018 |
| | | | | EP | 3387748 | A4 | 09 October 2019 |
| | | | | EP | 3387748 | B1 | 09 March 2022 |
| | | | | US | 2019342136 | A1 | 07 November 2019 |
| | | | | US | 10666479 | B2 | 26 May 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110180929